# EUROPÄISCHE PATENTSCHRIFT

(11) **EP 0 407 482 B1**
(45) Veröffentlichungstag und Bekanntmachung des Hinweises auf die Patenterteilung: **10.02.1993**
(21) Anmeldenummer: 89909708.3
(22) Anmeldetag: 04.09.1989
(51) Int. Cl.: B65G 21/02, A47B 96/14

(54) **KONSTRUKTIONSPROFIL**
CONSTRUCTION SECTION
PROFILE DE CONSTRUCTION

(30) Priorität: 06.09.1988 DE 8811236 U
(43) Veröffentlichungstag der Anmeldung: 16.01.1991
(73) Patentinhaber: GRÄSSLIN KG, D-78112 St. Georgen (DE)
(72) Erfinder: FEHRENBACHER, Horst, D-7737 Hochemmingen (DE)
(74) Vertreter: Thoma, Friedrich, Dipl.-Ing.(FH)
(86) Internationale Anmeldenummer: DE8900574
(87) Internationale Veröffentlichungsnummer: WO9002695

(56) Entgegenhaltungen:
- EP-A- 0 036 958
- EP-A- 0 203 352
- DE-A- 2 024 486
- DE-A- 3 537 135

## Beschreibung

Die Neuerung betrifft ein Konstruktionsprofil mit den Merkmalen nach dem Oberbegriff des Schutzanspruchs 1.

Bei derartigen Konstruktionsprofilen ist es erforderlich, daß sie universell verwendbar sind, indem mit ihnen rationell und wirtschaftlich nicht nur flexible selbsttragende Montagesysteme, vom einfachsten Arbeitstisch bis zur komplett ausgestatteten flexiblen Montageanlage aufgebaut werden können, sondern daß derartige Konstruktionsprofile auch bei den, auf den Montagesystemen zum Einsatz kommenden, Werkzeugen und Vorrichtungen, als ein, zum Montagesystem kompatibles, Konstruktionselement verwendbar sind. Dabei soll sichergestellt sein, daß die, in Profil-Längsrichtung verlaufenden, Nuten und Kanten auf den einzelnen Außen-Seiten in sich und zueinander so bemessen sind, daß eine universelle mittelbare Kombinierbarkeit solcher Konstruktionsprofile auch mit zueinander unterschiedlicher Umfangsgröße möglich ist. Außerdem ist es bei derartigen Konstruktionsprofilen erforderlich, daß in den Nuten und/oder Hohlräumen einfach und zweckmäßig Transportbänder, Antriebsriemen, Führungselemente wie Rohre, Stangen und Abdeckungen, sowie elektrische Leitungen und pneumatische bzw. hydraulische Energiemittel geführt werden können.

Aus der DE-OS 35 40 399 ist ein Konstruktionsprofil mit einem im wesentlichen rechteckigen Querschnitt bekanntgeworden, das auf den einzelnen Seiten seines Umfangs mit mehreren offenen, T-förmigen Nuten versehen ist und im Inneren mit einem kreuzförmigen, mittelbar unterteilbaren Hohlraum zur Aufnahme von stab- oder rohrförmigen Konstruktionselementen ausgestattet ist.

Dieses Konstruktionsprofil ist nur begrenzt einsetzbar. So ist es beispielsweise nicht möglich für den dort ausdrücklich vorgesehenen Einsatz bei komplizierten Geräten und Maschinen, wie dies Montageeinrichtungen mit Transportbändern darstellen, für die derartige Konstruktionsprofile zunehmend verwendet werden, ein Transportband und/oder Antriebsriemen, sowohl in der einen, als auch in der anderen Laufrichtung derart zu führen, daß er dort endlos montiert werden kann.

Aus der Druckschrift "Flexible Automation", Ausgabe 3, "FMS: Die Mechanik-Grundelemente" der Robert Bosch GmbH, sowie aus der diesbezüglichen EP-A-0 036 958, ist ein Tragprofil für Transportbänder bekannt, welches im Querschnitt rechteckig oder quadratisch ist und das an drei Seiten hinterschnittene Längsnuten zur Aufnahme von Verbindungsmitteln wie Befestigungsschrauben für Verbindungselemente oder dergleichen aufweist, wobei eine im oberen Bereich des Tragprofils vorgesehene Aussparung vorgesehen ist, zur Aufnahme eines angepaßten Band-Führungsprofils.

Dieses bekannte Tragprofil erfüllt zwar eine Vielzahl der eingangs erwähnten Erfordernisse an derartige Konstruktionsprofile aufweist, jedoch hinsichtlich seiner spezifischen Abmessungen ist eine sinnvolle mittelbare Kombinierung mit gleichförmigen Profilen, jedoch unterschiedlichen Umfangsgrößen nicht ermöglicht.

Der Neuerung liegt die Aufgabe zugrunde, ein Konstruktionsprofil der eingangsgenannten Art zu schaffen, das eine universelle Anwendbarkeit, sowohl hinsichtlich der mittelbaren Verbindung mindestens von zwei gleichen oder in ihrer Umfangsgröße unterschiedlichen Konstruktionsprofilen ermöglicht, das die zur Profiloberfläche versenkbare Lagerung mindestens einer Teillänge eines endlosen Transportbandes und/oder Antriebsriemens sicherstellt und das mit einer Einrichtung versehen ist, mit der mindestens ein weiteres vergleichbares Konstruktionsprofil mittelbar schnellbefestigt werden kann. Ferner ist es Aufgabe der Neuerung, eine einfache und zuverlässige mittelbare Befestigungsvorrichtung mit einer Schnellbefestigungseinrichtung für derartige Konstruktionsprofile zu schaffen.

Diese Aufgabe wird nach der Neuerung mit den Merkmalen im kennzeichnenden Teil des Patentanspruchs 1 gelöst,und in den Unteransprüchen sind weitere vorteilhafte Einzelheiten beansprucht.

Vorteilhaft bei diesem Konstruktionsprofil ist nicht nur, daß durch den räumlich klar bestimmten Abstand der insbesondere zur Seitenhalbierenden symmetrisch angeordneten, hinterschnittenen Nuten zur räumlichen Tiefe dieser Nuten eine zu der Oberfläche der einzelnen Seiten versenkte Anordnung eines Teils eines endlosen Transportbandes möglich ist, ohne zu diesem Zweck ein speziell ausgebildetes Sonderprofil zu benötigen, sondern auch, daß durch die räumliche Festlegung des Abstandes der Außenkanten der beiden einander gegenüberliegenden schmäleren Seitenflächen zum Abstand der einander gegenüberliegenden Nutenkanten zweier Befestigungsnuten auf jeweils der gleichen breiteren Seite des Profils eine mittelbare Befestigungsvorrichtung eingesetzt werden kann, die in ein und derselben Ausführung sowohl auf den schmäleren als auch auf den breiteren Seiten eingesetzt werden kann. Vorteilhaft ist ferner, daß durch die Anordnung von Rastnuten, die dort zu bestimmten Befestigungsnuten und zu den Außenkanten angeordnet sein können, eine vorläufige Schnellbefestigung einer mittelbaren Befestigungsvorrichtung auf dem Konstruktionsprofil möglich ist.

Ausführungsbeispiele der Neuerung sind in der Zeichnung dargestellt und werden im folgenden näher erläutert. Es zeigen
Fig. 1 eine Querschnittsansicht durch das neue Konstruktionsprofil,
Fig. 2 eine Querschnittsansicht durch ein Konstruktionsprofil nach Anspruch 1 mit in den räumlich breiteren Nuten ein gelagerten Transportbändern,
Fig. 3 eine schaubildliche Ansicht mit einem auf eine schmälere Seite des Profils aufgerastete Befestigungsvorrichtung,
Fig. 4 eine schaubildliche Ansicht mit einem auf eine der breiteren Seiter im Eingriff mit den Befestigungsnuten aufgerastete Befestigungsvorrichtung,
Fig. 5 eine Querschnittsansicht durch eine mittelbare Befestigungsvorrichtung, mit beidseitigen Feder-Rastelementen,
Fig. 6 eine Teilschnittansicht durch eine der breiteren Nuten des Profils mit einer dort eingerasteten Abdeckung.
Fig. 7 eine Teilschnittansicht wie Fig. 6, jedoch mit umgekehrt in die Nut eingelegter, dort eingerasteter Abdeckung,
Fig. 8 eine Teilschnittansicht durch eine der schmäleren Befestigungsnuten mit einer dort eingerastet angeordenten Abdeckung und
Fig. 9 eine Teilschnittansicht wie Fig. 8, jedoch mit umgekehrt in die Nut eingerasteter Abdeckung.

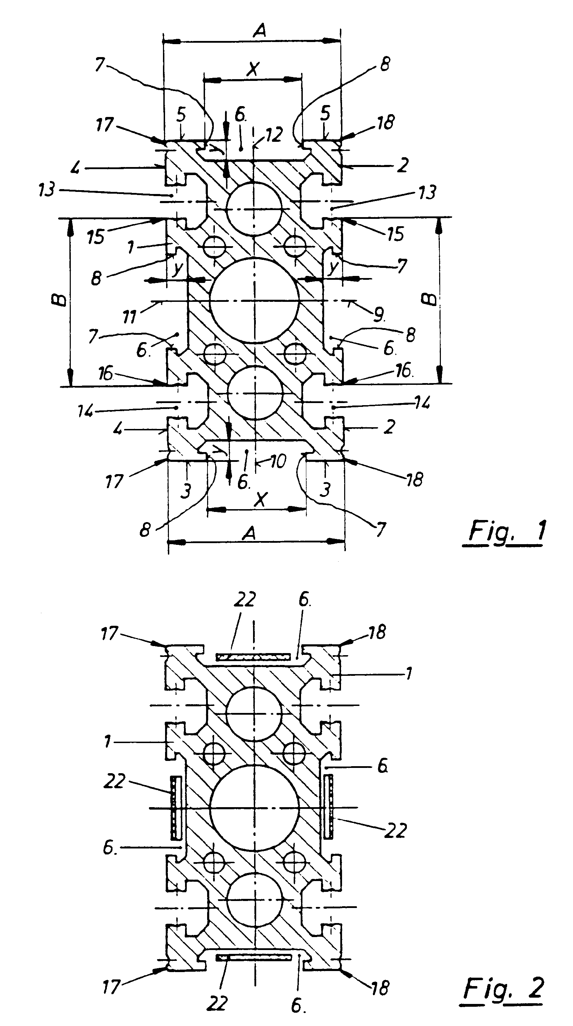

Das, in der Fig. 1 dargestellte, Profil 1 ist aus Metall, insbesondere aus Aluminium, oder aus einem Kunststoff extrudiert. Das Profil 1 hat im wesentlichen einen rechteckigen Querschnitt und ist auf allen vier Außen-Seiten 2, 3, 4, 5 mit nach außen hin offenen, hinterschnittenen Nuten 6, 13 und 14 versehen. Insbesondere die, zu den Seitenhalbierenden 9, 10, 11, 12 des Profils 1 symmetrisch angeordneten Nuten 6 haben zwischen den Nutenkanten 7 und 8 einen räumlichen Abstand X, der um den Faktor 4 bis 5 größer ist als die räumliche Tiefe Y der Nuten 6.

Damit ist es im Vergleich zu den bekanntgewordenen Konstruktionsprofilen möglich, in diesen relativ breiten Nuten 6 eine Teillänge eines endlosen Transportbandes 22 verlaufen zu lassen, wie dies aus der Fig. 2 ersichtlich ist.

Insbesondere auf den breiteren Seiten 2 und 4 verlaufen beidseitig zu den Nuten 6 sogenannte Befestigungsnuten 13 und 14. Die dort der jeweiligen Seitenhalbierenden 9, 11 benachbarten, zueinander parallel verlaufenden Nutenkanten 15 und 16 besitzen einen räumlichen Abstand B, der gleich groß ist dem räumlichen Abstand A, der zwischen den beiden Außenkanten 17 und 18 der schmäleren Seite 3 und 5 des Profils vorgesehen wurde.

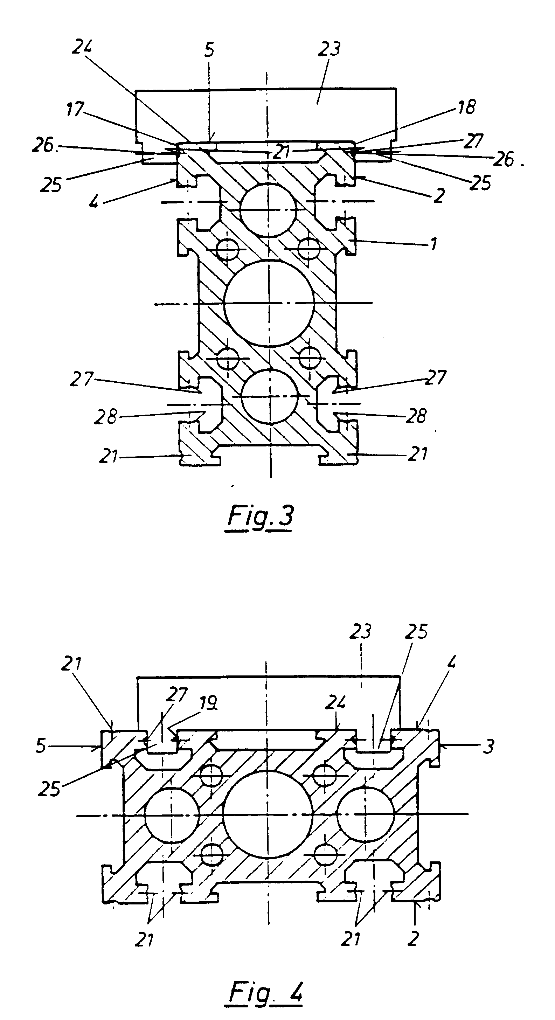

Damit ist es möglich, wie dies aus den Fig. 3 und 4 näher ersichtlich ist, eine zweckmäßige mittelbare Befestigungsvorrichtung 23 mit einer U-förmigen Ausbildung 24 auf das Profil 1 aufzustecken.

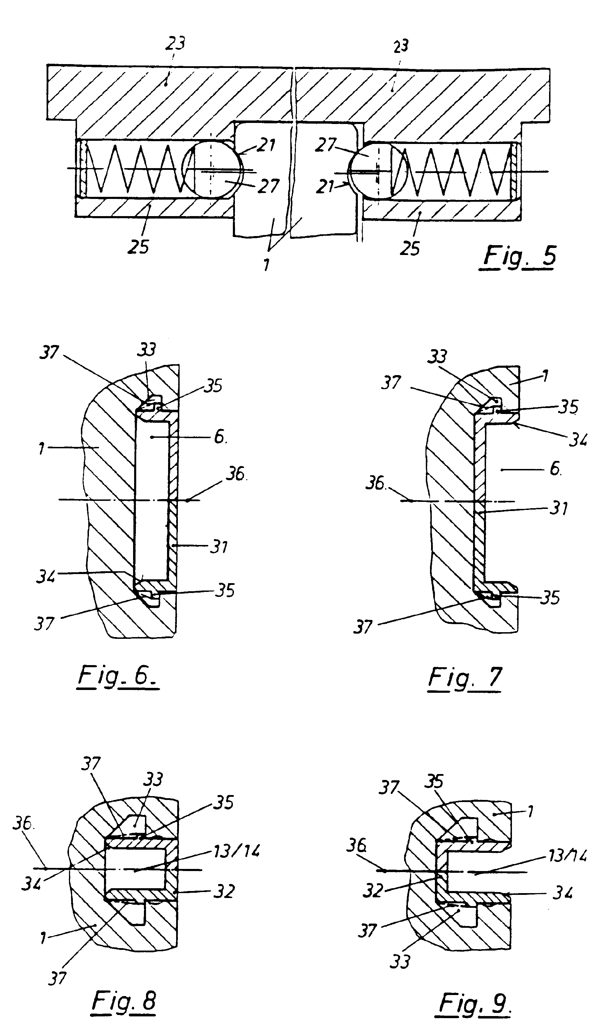

Die Fig. 3 zeigt eine Anordnung der Befestigungsvorrichtung 23 auf der schmäleren Seite 5 des Profils 1. Die Befestigungsvorrichtung 23 ist dort mittels zweier parallelverlaufender Flansche 25, die über die Aussenkanten 17 und 18 greifen, formschlüssig gelagert. Um eine hinreichend provisorische Selbsthaltung der Befestigungsvorrichtung 23 auf dem Profil 1 sicherzustellen, ist es nach einer vorteilhaften Weiterbildung der Neuerung vorgesehen, daß im Bereich der Außenkanten 17 und 18 auf den an die schmälere Seite 5 im rechten Winkel anschließenden Seiten 2 und 4 zu den Außenkanten 17 und 18 parallelverlaufende Rastnuten 21 angeordnet sind, in welche Rastelemente 26 eingreifen, die im Bereich der Flansche 25 auf der Befestigungsvorrichtung 23 angeordnet sind. Mit diesen Rastelementen 26, die zu mehreren auf jedem Flansch 25 angeordnet sein können und die, wie die Fig. 5 näher zeigt, aus einer federbelasteten Kugel 27 oder Walze bestehen können, die dort im jeweiligen Flansch 25 gelagert ist. Dabei kann der Querschnitt der Rastnuten 21 rund sein, insbesondere einen viertelkreisförmigen Querschnitt aufweisen.

Es liegt im Rahmen der Neuerung, daß anstelle einer Kugel 27 ein anderes Rastelement 26, beispielsweise ein prismatischer, federbelasteter Teil vorgesehen ist. Dabei ist auch der Querschnitt der Rastnuten 21 der jeweiligen Rastfläche des Rastelementes 26 angepaßt.

Wie aus der Fig. 4 ersichtlich ist, kann die in der Fig. 3 dargestellte, spezifisch ausgebildete Befestigungsvorrichtung 23 auch auf die breiteren Seiten 2 und 4 des Profils aufgesteckt werden. Durch die spezielle Bemessung der Breite der Flansche 25 ist es möglich, mit den Flanschen 25 in die Befestigungsnuten 13 und/oder 14 einzugreifen, zumal die einander benachbarten Nutenkanten 15 und 16 denselben räumlichen Abstand B zueinander aufweisen, der dem räumlichen Abstand A der beiden Außenkanten 17 und 18 der Seiten 3 und 5 entspricht.

Zur provisorischen Sicherung der Lage der Befestigungsvorrichtung 23 auf den breiteren Seiten 2 und 4 des Profils ist es wiederum vorgesehen, daß auf den einander gegenüberliegenden Nutenflächen 19 und 20 Rastnuten 21 vorgesehen sind, in welche die Rastelemente 26 an den Flanschen 25 eingreifen. In diesem Zusammenhange ist jedoch auch daran gedacht, daß die Rastelemente 26, anstatt in eine Rastnut 21 einzugreifen, hinter eine der inneren Nutenkanten 27 oder 28 rasten. Dies kann erforderlich sein, wenn die Höhe einer der Nutenflächen 19, 20 für die Anordnung einer Rastnut 21 zu gering ist. Die endgültige kraftschlüssige Befestigung einer oder mehrerer Befestigungsvorrichtungen 23 auf einem Profil 1 erfolgt mittelbar über die vorgesehenen Befestigungsnuten 13, 14 oder mit geeigneten, nicht näher dargestellten Befestigungselementen, die einerseits an der Befestigungsvorrichtung 23 und andererseits in den Befestigungsnuten 13, 14 lagenfixiert befestigt sind.

Die Befestigungsvorrichtung 23 ist zur mittelbaren Verbindung von zwei oder mehreren Profilen 1 miteinander. Außerdem kann mittels dieser Befestigungsvorrichtung eine nicht näher dargestellte Arbeitseinheit inform einer Axial- oder einer Dreheinheit in jeder beliebigen Winkellage auf einem Profil 1 angeordnet und kraftschlüssig befestigt werden.

Die Fig. 6, 7, 8 und 9 zeigen Abdeckungen 31 und 32, die in den Nuten 6 und/oder Befestigungsnuten 13 und 14 kraftschlüssig lösbar angeordnet, insbesondere dort eingerastet, werden können. Die Abdeckungen 31, 32, die in ihrem Aufbau gleich, jedoch zueinander verschieden breit sind, können einstückig oder zweistückig, insbesondere aus zwei im Querschnitt gleichen Hälften ausgebildet sein.

Im einzelnen zeigt die Fig. 6 eine Anordnung, bei welcher eine Nut 6 mit einer entsprechend bemessenen Abdeckung 31,die mit der Seite 2, 4 stufenlos flächeneben abschließt, abgedeckt ist. Zum Verrasten der Abdekkung 31 mit dem Profil 1 sind an der Abdeckung 31 Rastnasen 35 vorgesehen, welche in den Hinterschnitt 33 der Nuten 6 greifen. Die Rastnasen 35 können streifenförmig an der aus einem Kunststoff extrudierten Abdeckung 31 angeordnet sein. Sofern die Abdeckung 31 aus zwei gleichen Hälften aufgebaut ist, befindet sich der Verlauf der Trennungslinie 36 der Hälften zueinander im Bereich der jeweiligen Nutenhalbierenden.

Aus der Fig. 7 ist ersichtlich, daß die Abdeckung 31 im Vergleich zur Anordnung nach Fig. 6 auch um 180° verdreht in einer Nut 6 angeordnet sein kann. Die Anordnung kann zur Führung eines hier nicht näher dargestellten Transportbandes 22 oder eines Antriebsriemens dienen kann, wie dies in der Fig. 2 gezeigt ist. Zweckmäßigerweise sind die inneren vorderseitigen Kanten 34 der Abdekkung 31 nach außen hin abgeschrägt.

Die Fig. 8 zeigt eine Abdeckung 32 für die Befestigungsnuten 13 und 14. Auch hier ist ein um 180° axial verdrehter Einbau in die Befestigungsnuten 13 und 14 in einem Profil 1 vorgesehen, wie dies aus der Fig. 9 näher ersichtlich ist. Auch bei dieser Abdeckung 32 kann eine ein- oder eine zweistückige Ausführung vorgesehen sein. Die Rastnasen 35 an den Abdeckungen 32 oder 31 der Fig. 6 und 7, können mit einer zur jeweiligen Winkelkante hin verlaufenden Schräge 37 versehen sein.

Die Größe des Pröfils 1, insbesondere die jeweiligen Breiten und das Verhältnis der Breiten der Seiten 2 und 4 zu den Seiten 3 und 5 kann beliebig sein. Auch ist es möglich, daß zwei oder mehr Profile 1 mit zueinander unterschiedlichen Abmessungen. insbesondere der Breiten der Seiten 2, 4 bzw. 3, 5 derart bemessen sind, daß bei einem Profil 1 mit einer kleineren Umfangsgröße die breiteren Seiten 2, 4 der Breite der schmäleren Seite 3, 5 eines Profils 1 mit einer größeren Umfangsgröße entsprechen und umgekehrt.

## Patentansprüche

1. Konstruktionsprofil, in dessen im wesentlichen rechteckigen Querschnitt mehrere geschlossene und mehrere zu den einzelnen Seiten des Profils hin offene, in Längsrichtung verlaufende Hohlräume und hinterschnittene, insbesondere T-förmige Nuten zur Aufnahme von Verbindungsmitteln und/oder zur Führung von Transportbändern angeordnet sind, **dadurch gekennzeichnet**, daß die Nuten für eine vervenkbare Führung von Transportbändern ausgebildet sind, daß auf zwei einander gegenüberliegenden Seiten (2, 4) beidseitig und symmetrisch zu den Nutenkanten (7, 8) der Nuten (6) hinterschnittene, insbesondere T-förmige Befestigungsnuten (13, 14) angeordnet sind, bei denen der räumliche Abstand (B) zwischen den inneren, einander gegenüberliegenden und zueinander parallel verlaufenden Nutenkanten (15, 16) dieser Befestigungsnuten (13, 14) auf jeder Seitenfläche (2, 4) gleich groß ist dem räumlichen Abstand (A) der beiden Außenkanten (17, 18) der um 90° zu der Seitenfläche (2, 4) angeordneten Seitenflächen (3, 5) des Profils (1).

2. Konstruktionsprofil nach einem der Ansprüche 1, dadurch gekennzeichnet, daß parallelverlaufend zu den Außenkanten (17, 18) auf den Seitenflächen (2, 4) als auch auf den einander gegenüberliegenden Nutenflächen (19, 20) der Befestigungsnuten (13, 14) parallelverlaufend zu den dortigen Nutenkanten (15, 16) Rastnuten angeordnet sind.

3. Konstruktionsprofil nach Anspruch 2, dadurch gekennzeichnet, daß die Rastnuten (21) einen runden, insbesondere viertelkreisförmigen Querschnitt aufweisen.

## Claims

1. A construction section, in the substantially rectangular cross-section of which a plurality of closed cavities and a plurality of cavities which are open towards the individual sides of the section, extending in the longitudinal direction, are disposed, and undercut, in particular T-shaped grooves for the accomodation of connecting means and/or for the guidance of conveyor belts, are disposed, characterised in that the grooves are designed for the countersunk guidance of conveyor belts, that on two mutually opposed sides (2, 4) undercut, in particular T-shaped fixing grooves (13, 14), are arranged on both side of an symmetrically to the edges (7, 8) of the grooves (6), where the spatial distance (B) between the inner, mutually opposed edges (15, 16), which extend in parallel to one another, of these fixing grooves (13, 14) on each side surface (2, 4) is equal to the spatial distance (A) between the two outer edges (17, 18) of the sides surfaces (3, 5), extending at 90° to the side surface (2, 4), of the section (1).

2. A construction section as claimed in Claim 1, characterised in that locking grooves are disposed in parallel to the outer edges (17, 18) on the sides surfaces (2, 4) and also on the mutually opposed groove surfaces (19, 20) of the fixing grooves (13, 14) in parallel to their groove edges (15, 16).

3. A construction section as claimed in Claim 2, characterised in that the locking grooves (21) possess a circular, in particular quadrantal cross-section.

## Revendications

1. Profilé pour la construction dans la section transversale sensiblement rectangulaire duquel sont disposées plusieurs cavités fermées et plusieurs cavités ouvertes orientées vers les différents faces dudit profilé et s'étendant en direction longitudinale ainsi que des rainures, en particulier en forme de T réalisées en contre-dépouille destinées à recevoir des moyens de liaison et/ou pour guider des tapis transporteurs, caractérisé par le fait que lesdites rainures sont réalisées de manière à permettre que le passage les tapis transporteurs s'effectue à l'intérieur d'un évidement, que sur deux côtés se faisant face (2, 4) sont disposées bilatéralement et de manière symétrique aux arêtes (7, 8) des rainures (6), des rainures de fixation (13, 14), réalisées en dépouille et en particulier en forme de T sur lesquelles la distance spatiale (B) entre les arêtes (15, 16) se faisant face mutuellement et mutuellement parallèles de ces rainures de fixation (13, 14) sur chaque face latérale (2, 4) est égale à la distance spatiale (A) des deux arêtes extérieures (17, 18) des faces latérales (3, 5) du profilé 1 placées à 90° par rapport à la face latérale (2, 4).

2. Profilé pour la construction, selon la revendication 1, caractérisé par le fait que des rainures d'encastrement sont disposées parallèlement aux arêtes extérieures (17, 18) sur les faces latérales (2, 4) ainsi que sur les faces (19, 20) mutuellement en vis-à-vis des rainures de fixation (13, 14), lesdites rainures d'encastrement étant parallèles aux arêtes (15, 16) de ces rainures.

3. Profilé pour la construction selon la revendication 2, caractérisé par le fait que les rainures d'encastrement (21) présentent une section transversale arrondie, en particulier en forme de quart de cercle.
